(19) Europäisches Patentamt
European Patent Office
Office européen des brevets

(11) EP 4 597 469 A1

(12) **EUROPEAN PATENT APPLICATION**
published in accordance with Art. 153(4) EPC

(43) Date of publication:
06.08.2025 Bulletin 2025/32

(51) International Patent Classification (IPC):
G08G 1/01 (2006.01)    G06V 20/50 (2022.01)

(21) Application number: 24875720.5

(22) Date of filing: 25.09.2024

(86) International application number:
PCT/CN2024/120990

(87) International publication number:
WO 2025/112854 (05.06.2025 Gazette 2025/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.11.2023 CN 202311611425

(71) Applicant: Huizhou Desay SV Automotive Co.,
Ltd.
Huizhou, Guangdong 516006 (CN)

(72) Inventors:
• WU, Zhikuan
  Huizhou
  Guangdong 516006 (CN)
• WANG, Yan
  Huizhou
  Guangdong 516006 (CN)
• HUANG, Chengxin
  Huizhou
  Guangdong 516006 (CN)

(74) Representative: Carangelo, Pierluigi et al
Jacobacci & Partners S.p.A.
Via Tomacelli 146
00186 Roma (IT)

(54) **PARKING SPACE IDENTIFICATION METHOD, APPARATUS AND DEVICE, AND STORAGE MEDIUM**

(57) Provided are a parking space recognition method, apparatus, and device and a storage medium. The method includes acquiring (S110) real-time parking lot information of a target parking lot and historical parking lot information of the target parking lot; determining (S120) target parking space confidence based on real-time parking space data in the real-time parking lot information and historical parking space data in the historical parking lot information; and determining (S130) a parking space corresponding to the target parking space confidence satisfying a preset condition as a target parking space, where the preset condition includes that the target parking space confidence is greater than or equal to a preset threshold.

FIG. 1

## Description

This application claims priority to Chinese Patent Application No. 202311611425.1 filed with the China National Intellectual Property Administration (CNIPA) on Nov. 28, 2023, the disclosure of which is incorporated herein by reference in its entirety.

## TECHNICAL FIELD

This application relates to the field of intelligent driving technology, for example, a parking space recognition method, apparatus, and device and a storage medium.

## BACKGROUND

With the rapid development of artificial intelligence technology, the automatic parking technology has been widely applied to many vehicles. The automatic parking technology of vehicles primarily involves three aspects: parking space recognition, trajectory planning, and parking control. Among these, parking space recognition serves as the foundation of the automatic parking technology. The accuracy of parking space recognition affects the overall performance of the automatic parking technology.

However, a parking space recognition method in the related art is highly affected by environment conditions in terms of the efficiency and accuracy of parking space recognition. For example, in relatively new residential underground parking lots, open-air parking lots during the daytime, and parking lots near nightclubs during the daytime, the efficiency and accuracy of parking space recognition may remain relatively high; however, in older residential areas, prolonged disrepair or prolonged dragging of cargo may cause parking space lines to become blurred. Moreover, at night, some open-air parking lots may suffer from insufficient lighting (or lack of lighting), reducing the grayscale difference between parking space lines and the ground. Alternatively, excessive light pollution may make a parking space difficult to distinguish. These environment factors pose significant challenges to parking space recognition, leading to reduced efficiency and accuracy of parking space recognition, affecting parking by users.

## SUMMARY

This application provides a parking space recognition method, apparatus, and device and a storage medium to address the problem where a related parking space recognition method is affected by the environment, leading to low efficiency and low accuracy of parking space recognition.

According to an aspect of this application, a parking space recognition method is provided. The parking space recognition method includes acquiring real-time parking lot information of a target parking lot and historical parking lot information of the target parking lot; determining target parking space confidence based on real-time parking space data in the real-time parking lot information and historical parking space data in the historical parking lot information; and determining a parking space corresponding to the target parking space confidence satisfying a preset condition as a target parking space, where the preset condition includes that the target parking space confidence is greater than or equal to a preset threshold.

According to another aspect of this application, a parking space recognition apparatus is provided. The parking space recognition apparatus includes an information acquisition module configured to acquire real-time parking lot information of a target parking lot and historical parking lot information of the target parking lot; a confidence determination module configured to determine target parking space confidence based on real-time parking space data in the real-time parking lot information and historical parking space data in the historical parking lot information; and a parking space determination module configured to determine a parking space corresponding to the target parking space confidence satisfying a preset condition as a target parking space, where the preset condition includes that the target parking space confidence is greater than or equal to a preset threshold.

According to another aspect of this application, a parking space recognition device is provided. The parking space recognition includes at least one processor; and a memory communicatively connected to the at least one processor.

The memory stores a computer program executable by the at least one processor to enable the at least one processor to perform the parking space recognition method of any embodiment of this application.

According to another aspect of this application, a computer-readable storage medium is provided. The computer-readable storage medium stores computer instructions configured to, when executed by a processor, cause the processor to perform the parking space recognition method of any embodiment of this application.

Solutions of embodiments of this application include acquiring real-time parking lot information of a target parking lot and historical parking lot information of the target parking lot; determining target parking space confidence based on real-time parking space data in the real-time parking lot information and historical parking space data in the historical parking lot information; and determining a parking space corresponding to the target parking space confidence satisfying a preset condition as a target parking space, where the preset condition includes that the target parking space confidence is greater than or equal to a preset threshold. In view that parking space lines may become blurred or incomplete and thus affect real-time parking space recognition when the environment deteriorates, if parking space recognition in the parking lot was previously performed under better environment conditions, the historical parking space data may be utilized to assist in the real-time parking space recognition, that is, parking space recognition may be performed comprehensively based on the real-time parking space data in the real-time parking lot information and the historical parking space data in the historical parking lot information. This can effectively address the problem in the related art where a parking space recognition method is affected by the environment, leading to low efficiency and low accuracy of parking space recognition. This can effectively reduce environment interference and improve the efficiency and accuracy of parking space recognition.

It is to be understood that the content described in this part is neither intended to identify key or important features of the embodiments of this application nor intended to limit the scope of this application. Other features of this application are apparent from the description provided hereinafter.

BRIEF DESCRIPTION OF DRAWINGS

To illustrate technical solutions in embodiments of this application more clearly, drawings used in the description of the embodiments are briefly described below. Apparently, the drawings described below illustrate part of the embodiments of this application. Those of ordinary skill in the art may further obtain other drawings based on these drawings on the premise that no creative work is done.

FIG. 1 is a flowchart of a parking space recognition method according to embodiment one of this application.

FIG. 2 is a flowchart of a parking space recognition method according to embodiment two of this application.

FIG. 3 is a diagram of a parking space grayscale image according to an embodiment of this application.

FIG. 4 is a diagram illustrating the structure of a parking space recognition apparatus according to embodiment three of this application.

FIG. 5 is a diagram illustrating the structure of a parking space recognition device according to an embodiment of this application.

DETAILED DESCRIPTION

For a better understanding of solutions of this application by those skilled in the art, technical solutions in embodiments of this application are described clearly and completely hereinafter in conjunction with the drawings in the embodiments of this application. Apparently, the embodiments described hereinafter are part, not all, of embodiments of this application. Based on the embodiments of this application, all other embodiments obtained by those of ordinary skill in the art without creative work are within the scope of this application.

It is to be noted that terms such as "first" and "second" in the description, claims, and drawings of this application are used to distinguish between similar objects and are not necessarily used to describe a particular order or sequence. It is to be understood that data used in this manner are interchangeable where appropriate so that the embodiments of this application described herein can be implemented in an order not illustrated or described herein. Additionally, terms "include" and "have" and any variations thereof are intended to encompass a non-exclusive inclusion. For example, a process, method, system, product, or device that includes a series of steps or units not only includes the expressly listed steps or units but may also include other steps or units that are not expressly listed or are inherent to such process, method, product, or device.

Embodiment one

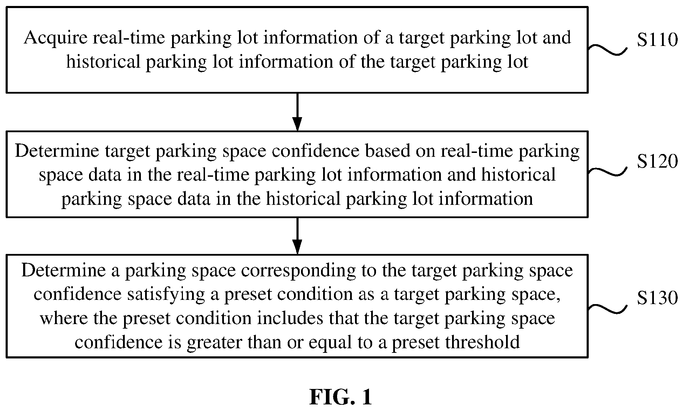

FIG. 1 is a flowchart of a parking space recognition method according to embodiment one of this application. This embodiment is applicable to scenarios of parking space recognition. The parking space recognition method may be performed by a parking space recognition apparatus. The parking space recognition apparatus may be implemented by hardware and/or software. The parking space recognition apparatus may be configured in a parking space recognition device. Optionally, the parking space recognition device may be a vehicle or may be integrated into a vehicle. As shown in FIG. 1, the parking space recognition method includes the following:

In S110, real-time parking lot information of a target parking lot and historical parking lot information of the target parking lot are acquired.

In this embodiment, the target parking lot is a parking lot where parking space recognition of a vehicle is performed at the current moment. The real-time parking lot information may include related information of the target parking lot recognized by the vehicle at the current moment. For example, the real-time parking lot information may include real-time environment data, real-time parking space data, and real-time positioning data. The real-time environment data is environment-related data other than the real-time parking space data and the real-time positioning data. For example, the real-time environment data may include a parking lot sign, an entrance security kiosk, and an entrance railing. The historical parking lot information includes related information of the target parking lot recognized by the vehicle at a moment before the current moment. The historical parking lot information includes historical environment data, historical parking space data, and historical positioning data. The historical environment data is environment-related data other than the historical parking space data and the historical positioning data. For example, the content of the real-time environment data is in one-to-one correspondence with the real-time environment data.

Specifically, it is possible to acquire the real-time parking lot information by recognizing the current parking lot by using a related device on the vehicle. For example, the real-time environment data of the target parking lot may be acquired by using an image recognition device such as a surround-view camera, and the real-time positioning data of the vehicle may be acquired by using a positioning device. The historical positioning data of the target parking lot is searched for by using real-time positioning data in the real-time parking lot information. If the historical positioning data is found, the historical parking lot information of the target parking lot can be determined.

In S120, target parking space confidence is determined based on real-time parking space data in the real-time parking lot information and historical parking space data in the historical parking lot information.

In this embodiment, the real-time parking space data includes related information of a parking space in the target parking lot recognized by the vehicle at the current moment, for example, four sets of corner coordinates of a candidate parking space recognized in real time. The historical parking space data includes related information of the candidate parking space in the target parking lot recognized by the vehicle at a moment before the current moment. The target parking space confidence indicates the probability that the recognized candidate parking space is a real parking space.

Specifically, the image recognition device is used to recognize the surrounding environment of the vehicle to acquire the candidate parking space and the related data corresponding to the candidate parking space. The real-time parking space data is generated based on the related data corresponding to the candidate parking space. Then the target parking space confidence is determined by a comparison between the real-time parking space data and the historical parking space data.

Optionally, to improve the accuracy of parking space recognition, it is also feasible to recognize a visual parking space through the image recognition device and sense obstacles around the current vehicle through an ultrasonic sensor in real time to construct a real-time space parking space; and determine the candidate parking space based on the visual parking space and the space parking space.

In S130, a parking space corresponding to the target parking space confidence satisfying a preset condition is determined as a target parking space, where the preset condition includes that the target parking space confidence is greater than or equal to a preset threshold.

In this embodiment, the preset threshold is a preset value, and the preset condition is a condition preset based on actual circumstances. The parking space corresponding to the target parking space confidence includes the candidate parking space.

Specifically, the target parking space confidence indicates the probability that the recognized candidate parking space is a real parking space. If the probability that the recognized candidate parking space is a real parking space is low, the target parking space confidence is low. If the probability that the recognized candidate parking space is a real parking space is high, the target parking space confidence is high. Accordingly, that the target parking space confidence is greater than or equal to the preset threshold is used as the preset condition, and the parking space satisfying the preset condition is determined as the target parking space. This can effectively avoid parking space misrecognition. Moreover, a parking space not satisfying the preset condition is not determined as the target parking space, better improving the accuracy of parking space recognition.

Optionally, the target parking space can be presented on a central control display screen of the vehicle so that the user can park the vehicle based on the target parking space displayed on the central control display screen.

The solution of embodiment one of this application includes acquiring real-time parking lot information of a target parking lot and historical parking lot information of the target parking lot; determining target parking space confidence based on real-time parking space data in the real-time parking lot information and historical parking space data in the historical parking lot information; and determining a parking space corresponding to the target parking space confidence satisfying a preset condition as a target parking space, where the preset condition includes that the target parking space confidence is greater than or equal to a preset threshold. In view that parking space lines may become blurred or incomplete and thus affect real-time parking space recognition when the environment deteriorates, if parking space recognition in the parking lot was previously performed under better environment conditions, the historical parking space data may be utilized to assist in the real-time parking space recognition, that is, parking space recognition may be performed comprehensively based on the real-time parking space data in the real-time parking lot information and the historical parking space data in the historical parking lot information. This can effectively address the problem in the related art where a parking space recognition method is affected by the environment, leading to low efficiency and low accuracy of parking space recognition. This can effectively reduce environment interference and improve the efficiency and accuracy of parking space recognition.

In some embodiments, the historical parking lot information is determined in the following manner: recognizing, by a preset device of a target vehicle, a surrounding environment of the target vehicle to obtain environment recognition information; determining whether a parking space is available based on the environment recognition information; and in response to the parking space being available, marking a parking lot in the environment recognition information by using a preset identifier and determining the historical parking lot information based on the environment recognition information, where the preset identifier indicates the unique identity of the parking lot. This solution can effectively determine the historical parking lot information.

In this embodiment, the target vehicle is a vehicle required to recognize the surrounding environment. The preset device is mounted on the target vehicle and configured to recognize the surrounding environment. The preset device may include an image recognition device and a positioning device. The environment recognition information includes recognized environment information. The environment recognition information may include positioning information and the visual parking space. The preset identifier includes a preset symbol. The symbol may be, for example, a number or a letter. For example, the preset identifier is 1, 2, 3, .... The preset identifier indicates the unique identity of the parking lot. The historical parking lot information is in one-to-one correspondence with the real-time parking lot information.

Specifically, the preset device mounted on the target vehicle is used to recognize the surrounding environment of the target vehicle to acquire the environment recognition information. For example, the surrounding environment information of the target vehicle may be acquired by using an image recognition device such as a surround-view camera, and the positioning information of the target vehicle may be acquired by using a positioning device. The environment recognition information may include parking space information, environment information, and positioning information. The environment information may be information other than the parking space information and the positioning information. Based on the environment recognition information, it can be determined whether a parking space is available around the target vehicle. If a parking space is available, it is proved that this area is a parking lot, and the parking lot in the environment recognition information is marked by using the preset identifier. If a parking lot has already been marked, sequential marking is required. For example, if a parking lot marked as 3 already exists, the currently recognized parking lot should be marked as 4. Then the historical parking lot information is determined based on the environment recognition information. For example, the positioning information in the environment recognition information is determined as the historical positioning data, the parking space information in the environment recognition information is determined as the historical parking space data, and the environment information in the environment recognition information is determined as the historical environment data.

Optionally, to improve the accuracy of parking space recognition, in addition to recognizing the visual parking space through the image recognition device, it is also feasible to sense obstacles around the current vehicle through the ultrasonic sensor in real time to construct the real-time space parking space; and generate the parking space information in the environment recognition information based on the visual parking space and the space parking space.

In some embodiments, the historical parking lot information is stored in at least one of the following manners: stored locally on the current vehicle or stored on a cloud server of the current vehicle.

Specifically, the acquired historical parking lot information may be stored locally on the current vehicle, improving the efficiency of acquiring the historical parking lot information by the vehicle. The historical parking lot information may also be stored on the cloud server of the current vehicle. If the historical parking lot information is stored on the cloud server, the current vehicle and other vehicles are allowed to share the historical parking lot information at different time points so that the current vehicle can effectively reduce the storage cost and so that other vehicles can acquire the historical parking lot information from the cloud, effectively saving time and costs and facilitating parking space recognition of the vehicles. The current vehicle of this embodiment may be the target vehicle or a vehicle different from the target vehicle.

Embodiment two

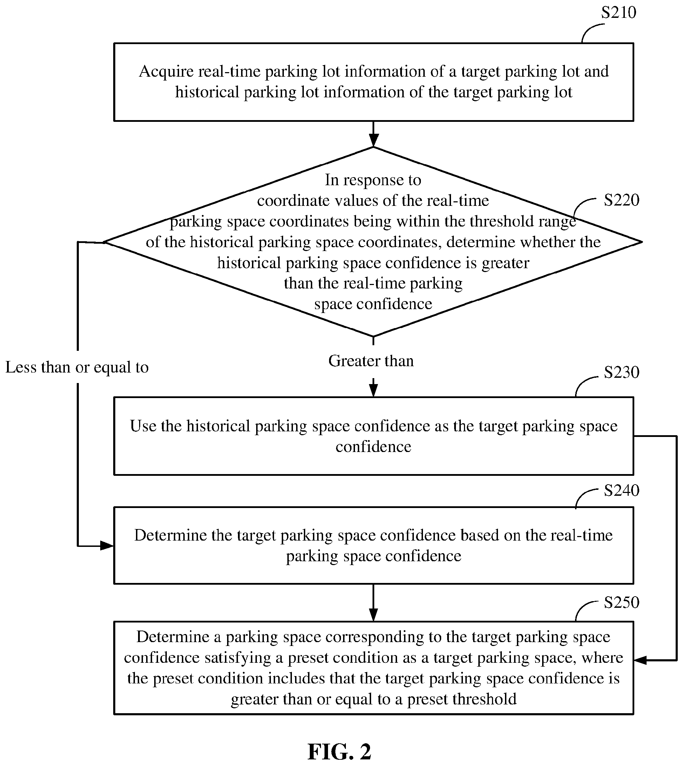

FIG. 2 is a flowchart of a parking space recognition method according to embodiment two of this application. This embodiment is optimized and extended based on each previous optional embodiment. This embodiment describes how to determine the target parking space confidence based on the real-time parking space data in the real-time parking lot information and the historical parking space data in the historical parking lot information. Here the real-time parking space data includes real-time parking space coordinates and real-time parking space confidence, and the historical parking space data includes historical parking space coordinates and historical parking space confidence. As shown in FIG. 2, the parking space recognition method includes the following:

In S210, real-time parking lot information of a target parking lot and historical parking lot information of the target parking lot are acquired.

In S220, in response to coordinate values of the real-time parking space coordinates being within the threshold range of the historical parking space coordinates, it is determined whether the historical parking space confidence is greater than the real-time parking space confidence; and if it is determined that the historical parking space confidence is greater than the real-time parking space confidence, S230 is performed; if it is determined that the historical parking space confidence is less than or equal to the real-time parking space confidence, S240 is performed.

In this embodiment, the threshold range is set based on actual circumstances. For example, the threshold range may be set to [*x* - 15*cm*, *x*+*15cm*]. Here *x* may be a coordinate value of the historical parking space coordinates.

Specifically, when the coordinate values of the real-time parking space coordinates are within the threshold range of the historical parking space coordinates, it may be determined that there is a relatively large possibility that a parking space is available at the position. It is determined whether the historical parking space confidence is greater than the real-time parking space confidence to determine whether the candidate parking space corresponding to the real-time parking space confidence serves as the target parking space.

In S230, the historical parking space confidence is used as the target parking space confidence.

Specifically, when the historical parking space confidence is greater than the real-time parking space confidence, it is indicated that although the contour of the parking space is recognized at the current moment, the parking space lines may be affected by environmental factors, resulting in blurred or indistinguishable parking space lines, leading to lower real-time parking space confidence. In this case, to better determine the parking space and avoid misrecognition, the historical parking space confidence is used as the target parking space confidence, improving the probability of parking space recognition.

In S240, the target parking space confidence is determined based on the real-time parking space confidence.

Specifically, when the historical parking space confidence is less than the real-time parking space confidence, it is indicated that parking space recognition at the current moment is not affected by environment factors, and the recognized candidate parking space is closer to a real parking space. In this case, the target parking space confidence can be determined based on the real-time parking space confidence. When the historical parking space confidence is equal to the real-time parking space confidence, the candidate parking spaces recognized at two consecutive moments have the same probability of being real parking spaces. In this case, the target parking space confidence can be determined based on either the real-time parking space confidence or the historical parking space confidence.

In S250, a parking space corresponding to the target parking space confidence satisfying a preset condition is determined as a target parking space, where the preset condition includes that the target parking space confidence is greater than or equal to a preset threshold.

The solution of embodiment two of this application includes that real-time parking lot information of a target parking lot and historical parking lot information of the target parking lot are acquired; and in response to coordinate values of the real-time parking space coordinates being within the threshold range of the historical parking space coordinates, it is determined whether the historical parking space confidence is greater than the real-time parking space confidence; and if it is determined that the historical parking space confidence is greater than the real-time parking space confidence, the historical parking space confidence is used as the target parking space confidence; if it is determined that the historical parking space confidence is less than or equal to the real-time parking space confidence, the real-time parking space confidence is used as the target parking space confidence. This solution can effectively avoid the impact of poor environment conditions on parking space recognition and thus effectively improve the efficiency and accuracy of parking space recognition.

In some embodiments, the real-time parking space data also includes a real-time environment score, and the historical parking space data also includes a historical environment score; and the method also includes, in response to determining that the historical parking space confidence is equal to the real-time parking space confidence, determining whether the real-time environment score is greater than the historical environment score; and in response to determining that the real-time environment score is greater than the historical environment score, updating the historical parking space data based on the real-time parking space data corresponding to the real-time environment score.

In this embodiment, the environment score is used to determine the parking space based on the parking space lines and the background corresponding to the parking space lines. Generally, the more obvious the parking space lines, the larger the difference between the parking space lines and the background corresponding to the parking space lines, and the higher the environment score; and the less obvious the parking space lines, the smaller the difference between the parking space lines and the background corresponding to the parking space lines, and the lower the environment score.

Specifically, when the historical parking space confidence is equal to the real-time parking space confidence, the target parking space can be determined by either the historical parking space confidence or the real-time parking space confidence. However, to ensure the good quality of the historical parking lot information, it is required to further determine whether the real-time environment score is greater than the historical environment score. If the real-time environment score is greater than the historical environment score, the historical parking space data is updated based on the real-time parking space data corresponding to the real-time environment score, ensuring the good quality of the historical parking lot information.

Optionally, if the historical parking space confidence is less than the real-time parking space confidence, the environment score is no longer determined, and the historical parking space data can be updated based on the real-time parking space data corresponding to the real-time environment confidence.

In some embodiments, an environment score is determined in the following manner: converting a parking space image into a parking space grayscale image, where the parking space image is acquired by an image recognition device, the parking space image includes parking space lines and a parking space line background corresponding to the parking space lines, and the parking space lines are determined by parking space coordinates; calculating a parking space line average grayscale value and a parking space line grayscale standard deviation corresponding to the parking space lines in the parking space grayscale image and calculating a background average grayscale value and a background grayscale standard deviation corresponding to the parking space line background; calculating a contrast between the parking space lines and the parking space line background based on the parking space line average grayscale value, the parking space line grayscale standard deviation, the background average grayscale value, and the background grayscale standard deviation; and determining the environment score based on the contrast. This solution can effectively calculate the environment score.

In this embodiment, the parking space image is acquired by the image recognition device. The image recognition device may be a surround-view camera. The parking space image includes the parking space lines and the parking space line background corresponding to the parking space lines. The parking space grayscale image is an image in which each pixel contains only one sampled color. The environment score includes the historical environment score and the real-time environment score.

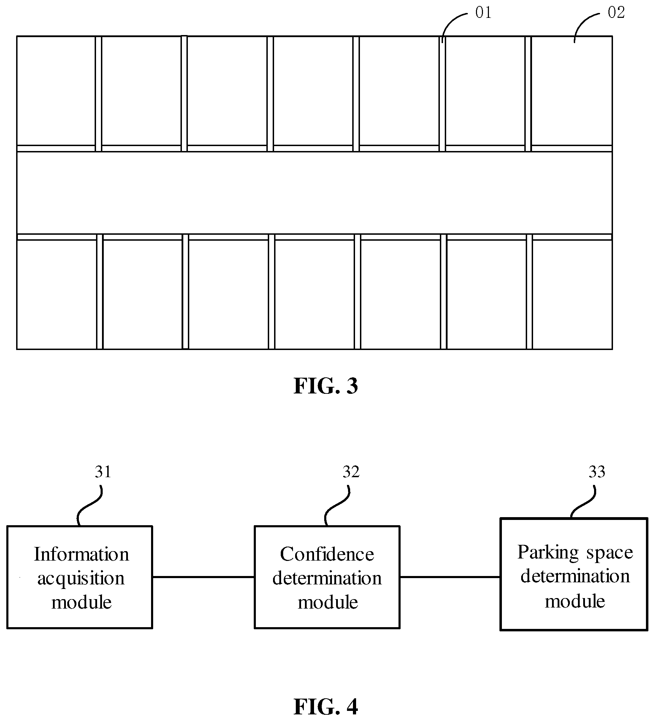

FIG. 3 is a diagram of a parking space grayscale image according to an embodiment of this application. The parking space image is acquired by the image recognition device. For example, the parking space image is captured by the surround-view camera. The parking space image is then converted into the parking space grayscale image, reducing interference from other colors. As shown in FIG. 3, this parking space grayscale image includes parking space lines 01 and the background 02 corresponding to the parking space lines. The parking space lines are determined based on the parking space coordinates.

The parking space line average grayscale value $l_1$ and the parking space line grayscale standard deviation $\sigma_1$ corresponding to the parking space lines in the parking space grayscale image are calculated. The background average grayscale value $l_2$ and the background grayscale standard deviation $\sigma_2$ corresponding to the parking space line background are calculated. The contrast between the parking space lines and the parking space line background is calculated based on the parking space line average grayscale value $l_1$, the parking space line grayscale standard deviation $\sigma_1$, the background

average grayscale value $l_2$, and the background grayscale standard deviation $\sigma_2$ by using the following formula:

$$contrast = (l_1 - l_2)/sqrt(\sigma_1{}^2 + \sigma_2{}^2)$$

Here *contrast* indicates the contrast between the parking space lines and the parking space line background.

The contrast between the parking space lines and the parking space line background is used as the environment score.

Similarly, for the real-time environment score, a real-time parking space image is acquired by the image recognition device. For example, the real-time parking space image is captured by the surround-view camera. The real-time parking space image is then converted into a real-time parking space grayscale image, reducing interference from other colors. This real-time parking space grayscale image includes real-time parking space lines and the real-time parking space line background corresponding to the real-time parking space lines. The real-time parking space lines are determined based on the real-time parking space coordinates.

The real-time parking space line average grayscale value $\dot{l}_1$ and the real-time parking space line grayscale standard deviation $\dot{\sigma}_1$ corresponding to the real-time parking space lines in the real-time parking space grayscale image are calculated. The real-time background average grayscale value $\dot{l}_2$ and the real-time background grayscale standard deviation $\dot{\sigma}_2$ corresponding to the real-time parking space line background are calculated. The real-time contrast between the real-time parking space lines and the real-time parking space line background is calculated based on the real-time parking space line average grayscale value $\dot{l}_1$, the real-time parking space line grayscale standard deviation $\dot{\sigma}_1$, the real-time background average grayscale value $\dot{l}_2$, and the real-time background grayscale standard deviation $\dot{\sigma}_2$ by using the following formula:

$$cont\dot{r}ast = (\dot{l}_1 - \dot{l}_2)/sqrt(\dot{\sigma}_1{}^2 + \dot{\sigma}_2{}^2)$$

Here *contrast* indicates the real-time contrast between the real-time parking space lines and the real-time parking space line background.

The real-time contrast between the real-time parking space lines and the real-time parking space line background is used as the real-time environment score.

Similarly, for the historical environment score, a historical parking space image is acquired by the image recognition device. For example, the historical parking space image is captured by the surround-view camera. The historical parking space image is then converted into a historical parking space grayscale image, reducing interference from other colors. This historical parking space grayscale image includes historical parking space lines and the historical parking space line background corresponding to the historical parking space lines. The historical parking space lines are determined based on the historical parking space coordinates.

The historical parking space line average grayscale value $\overline{l_1}$ and the historical parking space line grayscale standard deviation $\overline{\sigma_1}$ corresponding to the historical parking space lines in the historical parking space grayscale image are calculated. The historical background average grayscale value $\overline{l_2}$ and the historical background grayscale standard deviation $\overline{\sigma_2}$ corresponding to the historical parking space line background are calculated. The historical contrast between the historical parking space lines and the historical parking space line background is calculated based on the historical parking space line average grayscale value $\overline{l_1}$, the historical parking space line grayscale standard deviation $\overline{\sigma_1}$, the historical background average grayscale value $\overline{l_2}$, and the historical background grayscale standard deviation $\overline{\sigma_2}$ by using the following formula:

$$\overline{contrast} = \left(\overline{l_1} - \overline{l_2}\right)/sqrt(\overline{\sigma_1}^2 + \overline{\sigma_2}^2)$$

Here *contrast* indicates the historical contrast between the historical parking space lines and the historical parking space line background.

The historical contrast between the historical parking space lines and the historical parking space line background is used as the historical environment score.

In some embodiments, parking space coordinates include four sets of parking space corner coordinates; and the coordinate values of the real-time parking space coordinates are within the threshold range of the historical parking space coordinates in the following manner: Coordinate values of four sets of parking space corner coordinates of the real-time parking space coordinates are within threshold ranges of four sets of parking space corner coordinates of the historical parking space coordinates. This solution can effectively ensure that the parking space recognized in real time is the same as the one stored in history.

In this embodiment, the four sets of parking space corner coordinates include the coordinates of the four corners of the parking lot. The four sets of parking space corner coordinates include a set of first corner coordinates, a set of second corner coordinates, a set of third corner coordinates, and a set of fourth corner coordinates. Similarly, the real-time parking space coordinates include a set of real-time first corner coordinates, a set of real-time second corner coordinates, a set of real-time third corner coordinates, and a set of real-time fourth corner coordinates. Similarly, the historical parking space coordinates include a set of historical first corner coordinates, a set of historical second corner coordinates, a set of historical third corner coordinates, and a set of historical fourth corner coordinates. The threshold range includes a first threshold range, a second threshold range, a third threshold range, and a fourth threshold range.

Specifically, the coordinate values of the four sets of parking space corner coordinates of the real-time parking space coordinates are within the threshold ranges of the four sets of parking space corner coordinates of the historical parking space coordinates in the following manner: The coordinate values of the set of real-time first corner coordinates are within the first threshold range of the set of historical first corner coordinates, the coordinate values of the set of real-time second corner coordinates are within the second threshold range of the set of historical second corner coordinates, the coordinate values of the set of real-time third corner coordinates are within the third threshold range of the set of historical third corner coordinates, and the coordinate values of the set of real-time fourth corner coordinates are within the fourth threshold range of the set of historical fourth corner coordinates.

In some embodiments, determining the target parking space confidence based on the real-time parking space data in the real-time parking lot information and the historical parking space data in the historical parking lot information also includes, in response to the coordinate values of the real-time parking space coordinates being not within the threshold range of the historical parking space coordinates, using the historical parking space confidence as the target parking space confidence. This solution can effectively avoid parking space misrecognition. Moreover, the use of the historical parking lot information can effectively improve the accuracy of parking space recognition.

Specifically, if any one of the coordinate values of the four sets of parking space corner coordinates of the real-time parking space coordinates is not within the corresponding one of the threshold ranges of the four sets of parking space corner coordinates of the historical parking space coordinates, the parking space recognized in real time may be inaccurate; but due to the existence of the historical parking space data, in view that the stored historical parking lot information is high-quality data, the historical parking space confidence may be used as the target parking space confidence.

Optionally, if there is an interference line segment on the parking space lines during real-time parking space recognition, two sets of real-time parking space coordinates are recognized. The two sets of real-time parking space coordinates are denoted as first set of real-time parking space coordinates and second set of real-time parking space coordinates. The first set of real-time parking space coordinates are recognized based on the interference line segment. Given first real-time parking space confidence is greater than given second real-time parking space confidence. In this case, if both the first set of real-time parking space coordinates and the second set of real-time parking space coordinates are within the corresponding threshold ranges of the historical parking space coordinates and if both the first real-time parking space confidence and the second real-time parking space confidence are greater than the historical parking space confidence, then the target parking space confidence may be determined by using the following formula:

$$\partial = \overline{contrast} * \overline{\partial} + \partial_2$$

Here $\partial$ indicates the target parking space confidence, *contrast* indicates the historical environment score, $\overline{\partial}$ indicates the historical parking space confidence, and $\partial_2$ indicates the second real-time parking space confidence. This method can better improve the accuracy of parking space recognition.

Optionally, in each previous embodiment, the real-time parking space data may also include a real-time parking space type, and the historical parking space data may also include a historical parking space type. The real-time parking space type includes a real-time vertical type, a real-time horizontal type, and a real-time diagonal type. The historical parking space type includes a historical vertical type, a historical horizontal type, and a historical diagonal type. When the real-time parking space type is the same as the historical parking space type, the target parking space confidence may be determined based on other information of the real-time parking space data and other information of the historical parking space data. When the real-time parking space type is different from the historical parking space type, the historical parking space confidence may be used as the target parking space confidence. Parking space recognition based on parking space types can effectively reduce the computational load and improve the efficiency of parking space determination.

Embodiment three

FIG. 4 is a diagram illustrating the structure of a parking space recognition apparatus according to embodiment three of this application. As shown in FIG. 4, the parking space recognition apparatus includes an information acquisition module 31 configured to acquire real-time parking lot information of a target parking lot and historical parking lot information of the target parking lot; a confidence determination module 32 configured to determine target parking space confidence based on real-time parking space data in the real-time parking lot information and historical parking space data in the historical parking lot information; and a parking space determination module 33 configured to determine a parking space corresponding to the target parking space confidence satisfying a preset condition as a target parking space, where the preset condition includes that the target parking space confidence is greater than or equal to a preset threshold.

The solution of embodiment three of this application can effectively address the problem in the related art where a parking space recognition method is affected by the environment, leading to low efficiency and low accuracy of parking space recognition. The solution of embodiment three of this application can effectively reduce environment interference and improve the efficiency and accuracy of parking space recognition.

Optionally, the real-time parking space data includes real-time parking space coordinates and real-time parking space confidence, and the historical parking space data includes historical parking space coordinates and historical parking space confidence.

Optionally, the confidence determination module 32 includes a confidence determination unit configured to, in response to coordinate values of the real-time parking space coordinates being within the threshold range of the historical parking space coordinates, determine whether the historical parking space confidence is greater than the real-time parking space confidence; a first confidence determination unit configured to, in response to determining that the historical parking space confidence is greater than the real-time parking space confidence, use the historical parking space confidence as the target parking space confidence; and a second confidence determination unit configured to, in response to determining that the historical parking space confidence is less than or equal to the real-time parking space confidence, determine the target parking space confidence based on the real-time parking space confidence.

Optionally, the real-time parking space data also includes a real-time environment score, and the historical parking space data also includes a historical environment score.

Optionally, the parking space recognition apparatus also includes a score determination module configured to, in response to determining that the historical parking space confidence is equal to the real-time parking space confidence, determine whether the real-time environment score is greater than the historical environment score; and a data updating module configured to, in response to determining that the real-time environment score is greater than the historical environment score, update the historical parking space data based on the real-time parking space data corresponding to the real-time environment score.

Optionally, an environment score is determined in the following manner: converting a parking space image into a parking space grayscale image, where the parking space image is acquired by an image recognition device, the parking space image includes parking space lines and a parking space line background corresponding to the parking space lines, and the parking space lines are determined by parking space coordinates; calculating a parking space line average grayscale value and a parking space line grayscale standard deviation corresponding to the parking space lines in the parking space grayscale image and calculating a background average grayscale value and a background grayscale standard deviation corresponding to the parking space line background; calculating a contrast between the parking space lines and the parking space line background based on the parking space line average grayscale value, the parking space line grayscale standard deviation, the background average grayscale value, and the background grayscale standard deviation; and determining the environment score based on the contrast.

Optionally, parking space coordinates include four sets of parking space corner coordinates.

Optionally, the coordinate values of the real-time parking space coordinates are within the threshold range of the historical parking space coordinates in the following manner: Coordinate values of four sets of parking space corner coordinates of the real-time parking space coordinates are within threshold ranges of four sets of parking space corner coordinates of the historical parking space coordinates.

Optionally, the historical parking lot information is determined in the following manner: recognizing, by a preset device of a target vehicle, a surrounding environment of the target vehicle to obtain environment recognition information; determining whether a parking space is available based on the environment recognition information; and in response to the parking space being available, marking a parking lot in the environment recognition information by using a preset identifier and determining the historical parking lot information based on the environment recognition information, where the preset identifier indicates the unique identity of the parking lot.

Optionally, the historical parking lot information is stored in at least one of the following manners: stored locally on the current vehicle or stored on a cloud server of the current vehicle.

Optionally, the confidence determination module 32 also includes a fourth confidence determination unit configured to, in response to the coordinate values of the real-time parking space coordinates being not within the threshold range of the historical parking space coordinates, use the historical parking space confidence as the target parking space confidence.

Optionally, the second confidence determination unit is configured to, in response to determining that both first real-time parking space confidence and second real-time parking space confidence are greater than the historical parking space confidence, determine the target parking space confidence based on a historical environment score, the historical parking space confidence, and the second real-time parking space confidence. Here the first real-time parking space confidence is greater than the second real-time parking space confidence, and first parking space coordinates corresponding to the first real-time parking space confidence and second parking space coordinates corresponding to the second real-time parking space confidence are both within the threshold range of the historical parking space coordinates.

The parking space recognition apparatus of this embodiment of this application can perform the parking space recognition method of any embodiment of this application and has function modules for and effects of performing the method.

Embodiment four

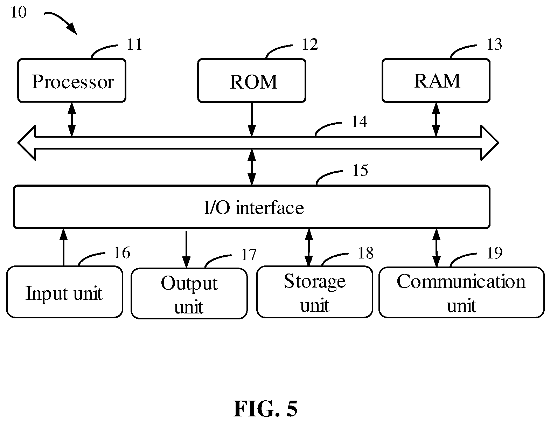

FIG. 5 is a diagram illustrating the structure of a parking space recognition device 10 according to an embodiment of this application. The parking space recognition device may be an electronic device intended to represent various forms of digital computers, for example, a laptop computer, a desktop computer, a worktable, a personal digital assistant, a server, a blade server, a mainframe computer, and an applicable computer. The electronic device may also represent various forms of mobile apparatuses, for example, a personal digital assistant, a cellphone, a smartphone, a wearable device (such as a helmet, glasses, or a watch), and a similar computing apparatus. Herein the shown components, the connections and relationships between these components, and the functions of these components are illustrative and are not intended to limit the implementation of this application as described and/or claimed herein.

As shown in FIG. 5, the electronic device 10 includes at least one processor 11 and a memory, such as a read-only memory (ROM) 12 or a random-access memory (RAM) 13, communicatively connected to the at least one processor 11. The memory stores a computer program executable by the at least one processor. The at least one processor 11 may perform various types of appropriate operations and processing according to a computer program stored in a read-only memory (ROM) 12 or a computer program loaded from a storage unit 18 to a random-access memory (RAM) 13. Various programs and data required for the operation of the electronic device 10 may also be stored in the RAM 13. The processor 11, the ROM 12, and the RAM 13 are connected to each other through a bus 14. An I/O interface 15 is also connected to the bus 14.

Multiple components in the electronic device 10 are connected to the I/O interface 15. The multiple components include an input unit 16 such as a keyboard or a mouse, an output unit 17 such as various types of display or speaker, the storage unit 18 such as a magnetic disk or an optical disk, and a communication unit 19 such as a network card, a modem, or a wireless communication transceiver. The communication unit 19 allows the electronic device 10 to exchange information/data with other devices over a computer network such as the Internet and/or various telecommunications networks.

The processor 11 may be various general-purpose and/or special-purpose processing components having processing and computing capabilities. Examples of the processor 11 include, but are not limited to, a central processing unit (CPU), a graphics processing unit (GPU), a special-purpose AI computing chip, a processor executing machine learning models and algorithms, a digital signal processor (DSP), and any appropriate processor, controller, and microcontroller. The processor 11 performs the various methods and processing described above, such as the parking space recognition method.

In some examples, the parking space recognition method may be implemented as computer programs tangibly contained in a computer-readable storage medium such as the storage unit 18. In some embodiments, part or all of the computer programs may be loaded and/or installed onto the electronic device 10 via the ROM 12 and/or the communication unit 19. When the computer programs are loaded to the RAM 13 and executed by the processor 11, one or more steps of the preceding parking space recognition method may be performed. Alternatively, in other embodiments, the processor 11 may be configured, in any other suitable manner (for example, by means of firmware), to perform the parking space recognition method.

Herein various embodiments of the preceding systems and techniques may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software, and/or combinations thereof. The various embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus, and at least one output apparatus and transmitting data and instructions to the memory system, the at least one input apparatus, and the at least one output apparatus.

Computer programs for implementation of the methods of this application may be written in one programming language or any combination of multiple programming languages. The computer programs may be provided for a processor of a general-purpose computer, a special-purpose computer, or another programmable data processing apparatus to enable functions/operations specified in a flowchart and/or a block diagram to be implemented when the computer programs are executed by the processor. The computer programs may be executed entirely on a machine, partly on a machine, as a stand-alone software package, partly on a machine and partly on a remote machine, or entirely on a remote machine or a server.

In the context of this application, the computer-readable storage medium may be a tangible medium that may include or store a computer program for use by or in connection with an instruction execution system, apparatus, or device. The computer-readable storage medium may include, but is not limited to, an electronic, magnetic, optical, electromagnetic, infrared, or semiconductor system, apparatus, or device, or any appropriate combination thereof. Alternatively, the computer-readable storage medium may be a machine-readable signal medium. Examples of a machine-readable storage medium include an electrical connection based on one or more wires, a portable computer disk, a hard disk, a RAM, a ROM, an erasable programmable read-only memory (EPROM), a flash memory, an optical fiber, a portable compact disc read-only memory (CD-ROM), an optical storage device, a magnetic storage device, or any appropriate combination thereof.

In order that interaction with a user is provided, the systems and techniques described herein may be implemented on the electronic device. The electronic device has a display device (for example, a cathode-ray tube (CRT) or a liquid-crystal display (LCD) monitor) for displaying information to the user; and a keyboard and a pointing device (for example, a mouse or a trackball) through which the user can provide input for the electronic device. Other types of apparatuses may also be used for providing interaction with a user. For example, feedback provided for the user may be sensory feedback in any form (for example, visual feedback, auditory feedback, or tactile feedback); and input from the user may be received in any form (including acoustic input, voice input, or tactile input).

The systems and techniques described herein may be implemented in a computing system including a back-end component (for example, a data server), a computing system including a middleware component (for example, an application server), a computing system including a front-end component (for example, a client computer having a graphical user interface or a web browser through which the user can interact with embodiments of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related virtual private server (VPS).

It is to be understood that various forms of the preceding flows may be used with steps reordered, added, or deleted. For example, the steps described in this application may be executed in parallel, in sequence, or in a different order as long as the desired results of the technical solutions of this application can be achieved. The execution sequence of the steps is not limited herein.

## Claims

1. A parking space recognition method, comprising:

    acquiring real-time parking lot information of a target parking lot and historical parking lot information of the target parking lot;
    determining target parking space confidence based on real-time parking space data in the real-time parking lot information and historical parking space data in the historical parking lot information; and
    determining a parking space corresponding to the target parking space confidence satisfying a preset condition as a target parking space, wherein the preset condition comprises that the target parking space confidence is greater than or equal to a preset threshold.

2. The method of claim 1, wherein the real-time parking space data comprises real-time parking space coordinates and real-time parking space confidence, and the historical parking space data comprises historical parking space coordinates and historical parking space confidence; and determining the target parking space confidence based on the real-time parking space data in the real-time parking lot information and the historical parking space data in the historical parking lot information comprises:

    in response to coordinate values of the real-time parking space coordinates being within a threshold range of the historical parking space coordinates, determining whether the historical parking space confidence is greater than the real-time parking space confidence; and
    in response to determining that the historical parking space confidence is greater than the real-time parking space confidence, using the historical parking space confidence as the target parking space confidence;
    in response to determining that the historical parking space confidence is less than or equal to the real-time parking space confidence, determining the target parking space confidence based on the real-time parking space confidence.

3. The method of claim 2, wherein the real-time parking space data further comprises a real-time environment score, and the historical parking space data further comprises a historical environment score;

and
the method further comprises:

    in response to determining that the historical parking space confidence is equal to the real-time parking space confidence, determining whether the real-time environment score is greater than the historical environment score; and
    in response to determining that the real-time environment score is greater than the historical environment score, updating the historical parking space data based on the real-time parking space data corresponding to the real-time environment score.

4. The method of claim 2, wherein an environment score is determined in the following manner:

    converting a parking space image into a parking space grayscale image, wherein the parking space image is acquired by an image recognition device, the parking space image comprises parking space lines and a parking space line background corresponding to the parking space lines, and the parking space lines are determined by parking space coordinates;
    calculating a parking space line average grayscale value and a parking space lines grayscale standard deviation corresponding to the parking space lines in the parking space grayscale image and calculating a background average grayscale value and a background grayscale standard deviation corresponding to the parking space line background;
    calculating a contrast between the parking space lines and the parking space line background based on the parking space line average grayscale value, the parking space line grayscale standard deviation, the background average grayscale value, and the background grayscale standard deviation; and
    determining the environment score based on the contrast.

5. The method of claim 2, wherein parking space coordinates comprise four sets of parking space corner coordinates; and
the coordinate values of the real-time parking space coordinates are within the threshold range of the historical parking space coordinates in the following manner:
coordinate values of four sets of parking space corner coordinates of the real-time parking space coordinates are within threshold ranges of four sets of parking space corner coordinates of the historical parking space coordinates.

6. The method of claim 1, wherein the historical parking lot information is determined in the following manner:

recognizing, by a preset device of a target vehicle, a surrounding environment of the target vehicle to obtain environment recognition information;

determining whether a parking space is available based on the environment recognition information; and

in response to the parking space being available, marking a parking lot in the environment recognition information by using a preset identifier and determining the historical parking lot information based on the environment recognition information, wherein the preset identifier indicates a unique identity of the parking lot.

7. The method of claim 1, wherein the historical parking lot information is stored in at least one of the following manners: stored locally on a current vehicle or stored on a cloud server of a current vehicle.

8. The method of claim 2, wherein determining the target parking space confidence based on the real-time parking space data in the real-time parking lot information and the historical parking space data in the historical parking lot information further comprises:

in response to the coordinate values of the real-time parking space coordinates being not within the threshold range of the historical parking space coordinates, using the historical parking space confidence as the target parking space confidence.

9. The method of claim 2, wherein in response to determining that the historical parking space confidence is less than the real-time parking space confidence, determining the target parking space confidence based on the real-time parking space confidence comprises: in response to determining that both first real-time parking space confidence and second real-time parking space confidence are greater than the historical parking space confidence, determining the target parking space confidence based on a historical environment score, the historical parking space confidence, and the second real-time parking space confidence, wherein the first real-time parking space confidence is greater than the second real-time parking space confidence, and first parking space coordinates corresponding to the first real-time parking space confidence and second parking space coordinates corresponding to the second real-time parking space confidence are both within the threshold range of the historical parking space coordinates.

10. A parking space recognition apparatus, comprising:

an information acquisition module, configured to acquire real-time parking lot information of a target parking lot and historical parking lot information of the target parking lot;

a confidence determination module, configured to determine target parking space confidence based on real-time parking space data in the real-time parking lot information and historical parking space data in the historical parking lot information; and

a parking space determination module, configured to determine a parking space corresponding to the target parking space confidence satisfying a preset condition as a target parking space,

wherein the preset condition comprises that the target parking space confidence is greater than or equal to a preset threshold.

11. A parking space recognition device, comprising:

at least one processor; and
a memory, communicatively connected to the at least one processor;

wherein the memory stores a computer program executable by the at least one processor to cause the at least one processor to perform the parking space recognition method of any one of claims 1 to 9.

12. A computer-readable storage medium storing computer instructions configured to, when executed by a processor, cause the processor to perform the parking space recognition method of any one of claims 1 to 9.

Acquire real-time parking lot information of a target parking lot and historical parking lot information of the target parking lot

$\sim$ S110

Determine target parking space confidence based on real-time parking space data in the real-time parking lot information and historical parking space data in the historical parking lot information

$\sim$ S120

Determine a parking space corresponding to the target parking space confidence satisfying a preset condition as a target parking space, where the preset condition includes that the target parking space confidence is greater than or equal to a preset threshold

$\sim$ S130

**FIG. 1**

S210

Acquire real-time parking lot information of a target parking lot and historical parking lot information of the target parking lot

In response to coordinate values of the real-time parking space coordinates being within the threshold range of the historical parking space coordinates, determine whether the historical parking space confidence is greater than the real-time parking space confidence

S220

Less than or equal to

Greater than

S230

Use the historical parking space confidence as the target parking space confidence

S240

Determine the target parking space confidence based on the real-time parking space confidence

S250

Determine a parking space corresponding to the target parking space confidence satisfying a preset condition as a target parking space, where the preset condition includes that the target parking space confidence is greater than or equal to a preset threshold

**FIG. 2**

01          02

**FIG. 3**

31                    32                    33

| Information acquisition module | Confidence determination module | Parking space determination module |

**FIG. 4**

**FIG. 5**

## INTERNATIONAL SEARCH REPORT

International application No.

**PCT/CN2024/120990**

### A. CLASSIFICATION OF SUBJECT MATTER

G08G 1/01(2006.01)i; G06V20/50(2022.01)i

According to International Patent Classification (IPC) or to both national classification and IPC

### B. FIELDS SEARCHED

Minimum documentation searched (classification system followed by classification symbols)

IPC: G08G, G01M, B60W, G06V

Documentation searched other than minimum documentation to the extent that such documents are included in the fields searched

Electronic data base consulted during the international search (name of data base and, where practicable, search terms used)

CNABS, VEN, CNTXT, CNKI: 车位, 识别, 停车, 泊车, 置信度, 相似度, 概率, 校正, 修正, 修复, 实时, 历史, 时段, 环境, 评分, 评价, 阴暗, 坐标, 角点, 四个角, 阈值, 背景, 灰度, 对比度, parking space, identi+, parking, confidence, similar+, probab +, correct+, real-time, history, period, environment, score, evaluat+, coordinate, corner, four corners, threshold, background, grayscale, contrast

### C. DOCUMENTS CONSIDERED TO BE RELEVANT

| Category* | Citation of document, with indication, where appropriate, of the relevant passages | Relevant to claim No. |
|---|---|---|
| PX | CN 117649763 A (HUIZHOU DESAY SV AUTOMOTIVE CO., LTD.) 05 March 2024 (2024-03-05) claims 1-12 | 1-12 |
| Y | CN 116189137 A (SUTENG INNOVATION TECHNOLOGY CO., LTD.) 30 May 2023 (2023-05-30) description, paragraphs 5-87, and figures 1-8 | 1-2, 5-8, 10-12 |
| Y | CN 113643564 A (SHENZHEN INSTITUTES OF ADVANCED TECHNOLOGY, CHINESE ACADEMY OF SCIENCES) 12 November 2021 (2021-11-12) description, paragraphs 80-116, and figures 1-3 | 1-2, 5-8, 10-12 |
| A | CN 116198529 A (HOLOMATIC TECHNOLOGY (BEIJING) CO., LTD.) 02 June 2023 (2023-06-02) entire document | 1-12 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 December 2024** | **24 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/120990** |

### C. DOCUMENTS CONSIDERED TO BE RELEVANT

| Category* | Citation of document, with indication, where appropriate, of the relevant passages | Relevant to claim No. |
| --- | --- | --- |
| A | CN 110334625 A (HEBEI UNIVERSITY OF TECHNOLOGY) 15 October 2019 (2019-10-15)<br>entire document | 1-12 |
| A | CN 115083199 A (SAIC MOTOR CORP., LTD.) 20 September 2022 (2022-09-20)<br>entire document | 1-12 |
| A | CN 116620302 A (CHINA FAW GROUP CORP. et al.) 22 August 2023 (2023-08-22)<br>entire document | 1-12 |
| A | CN 114034493 A (HANGZHOU HIKAUTO SOFTWARE CO., LTD.) 11 February 2022 (2022-02-11)<br>entire document | 1-12 |
| A | US 2023030600 A1 (PATEO CONNECT TECHNOLOGY SHANGHAI CORP.) 02 February 2023 (2023-02-02)<br>entire document | 1-12 |

Form PCT/ISA/210 (second sheet) (July 2022)

## INTERNATIONAL SEARCH REPORT
### Information on patent family members

International application No.

**PCT/CN2024/120990**

| Patent document cited in search report | | | Publication date (day/month/year) | Patent family member(s) | | | Publication date (day/month/year) |
|---|---|---|---|---|---|---|---|
| CN | 117649763 | A | 05 March 2024 | None | | | |
| CN | 116189137 | A | 30 May 2023 | None | | | |
| CN | 113643564 | A | 12 November 2021 | None | | | |
| CN | 116198529 | A | 02 June 2023 | None | | | |
| CN | 110334625 | A | 15 October 2019 | None | | | |
| CN | 115083199 | A | 20 September 2022 | None | | | |
| CN | 116620302 | A | 22 August 2023 | None | | | |
| CN | 114034493 | A | 11 February 2022 | None | | | |
| US | 2023030600 | A1 | 02 February 2023 | JP | 2023500915 | A | 11 January 2023 |
| | | | | JP | 7436655 | B2 | 21 February 2024 |
| | | | | WO | 2021109307 | A1 | 10 June 2021 |

Form PCT/ISA/210 (patent family annex) (July 2022)

**REFERENCES CITED IN THE DESCRIPTION**

**Patent documents cited in the description**

- CN 202311611425